# EUROPÄISCHE PATENTSCHRIFT

(11) **EP 1 268 168 B1**
(45) Veröffentlichungstag und Bekanntmachung des Hinweises auf die Patenterteilung: **06.10.2004**
(21) Anmeldenummer: 01933779.9
(22) Anmeldetag: 29.03.2001
(51) Int. Cl.: B29C 73/30

(54) **VERFAHREN UND VORRICHTUNG ZUM VULKANISIEREN VON FORMKÖRPERN AUS KAUTSCHUKMISCHUNGEN**
METHOD AND DEVICE FOR VULCANIZING SHAPED BODIES FROM RUBBER MIXTURES
PROCEDE ET DISPOSITIF DE VULCANISATION DE CORPS FORMES, CONSTITUES DE MELANGES DE CAOUTCHOUC

(30) Priorität: 31.03.2000 DE 10016165
(43) Veröffentlichungstag der Anmeldung: 02.01.2003
(73) Patentinhaber: Stahlgruber Otto Gruber GmbH & Co. KG, 85586 Poing (DE)
(72) Erfinder: SCHEUNGRABER, Patrick, 85586 Poing (DE)
(74) Vertreter: Beetz & Partner Patentanwälte
(86) Internationale Anmeldenummer: PCT/EP2001/003616
(87) Internationale Veröffentlichungsnummer: WO 2001/072505

(56) Entgegenhaltungen:
- US-A- 1 162 397
- US-A- 2 421 097
- US-A- 2 421 099
- US-A- 2 421 100
- US-A- 2 421 102
- US-A- 4 246 226

## Beschreibung

Die Erfindung betrifft ein Verfahren und eine Vorrichtung zum Vulkanisieren bzw. Vernetzen von Formkörper-Abschnitten aus insbesondere Kautschukmischungen unter Druck und erhöhter Temperatur, beispielsweise gemäß US 2 421 102.

Bei der Vulkanisation bzw. Vernetzung von vorgeformten Kautschukkörpern besteht regelmäßig das Problem, den für den Vulkanisationsprozeß notwendigen Druck und die erhöhte Temperatur gleichmäßig über den häufig komplexen Oberflächenverlauf verteilt in den Kautschukkörper einzubringen. Die Verwendung von jeweils genau angepaßten festen Formen ist nur bei der Serienfertigung gleicher Formkörper technisch und aus Kostengründen sinnvoll. In der Praxis haben sich zur Reparatur von Luftreifen Vulkanisiermethoden bewährt, bei denen ein Druckkopf mit ballig geformter Außenfläche ggf. über ein verformbares Druckpolster und eine Heizmatte auf die glattwandige Innenfläche des Reifens einwirkt, wobei der für den Vulkanisationsprozeß notwendige Druck durch Vorschub dieses Druckpolsters und die Vulkanisationstemperatur von der elektrischen Heizmatte erzeugt werden. Die ballige Form des Druckkopfes und die Flexibilität des Druckpolsters gewährleisten eine ausreichend gleichmäßige Verteilung des Vulkanisationsdruckes und der -temperatur auf die bereits durch Verfüllen mit Kautschukteilen und ggf. Abdecken mit Reparaturpflastern zubereitete Schadstelle an der Innenseite des Reifens. Die zur Erzielung des auf die Außenseite des Reifens einwirkenden Gegendruckes verwendeten Auflager bestehen z.B. gemäß DE 93 104 452 U1 aus mehreren gegeneinander verstellbaren Einzelteilen, die eine relativ grobe Formanpassung an den Verlauf der mitunter komplex geformten Schadstelle des Reifens erlauben. Derartige Auflager erfordern einen erheblichen Herstellungsaufwand und müssen für jeden Reifen entsprechend der Lage der jeweiligen Schadstelle möglichst genau eingestellt werden, um eine ausreichende Verteilung der Reaktionskräfte und auch der von einer zweiten elektrischen Heizmatte erzeugten Wärme zu ermöglichen. Die Verwendung derartiger mehrteiliger Auflager ist daher mit erhöhten Kosten für die gesamte Vulkanisationsvorrichtung sowie mit nachteiligen Richtarbeiten verbunden. Des weiteren sind trotz bestmöglicher Anpassung Verformungen und Abdrücke am Reifen mit diesen herkömmlichen Systemen nicht vermeidbar.

In der DE-PS 32 666 C ist ein Verfahren und eine Vorrichtung zum Vulkanisieren von vorgeformten gewalzten Kautschuk-Druckplatten beschrieben, die eine Wandstärke von 1 bis 2 mm haben. Ein Druckmodell wird zusammen mit einer solchen dünnen Kautschukplatte und einer Papierlage in ein als "Cuvette" bezeichnetes Kästchen eingelegt, das daraufhin mittels eines schwenkbaren Deckels fest verschlossen wird. Daraufhin wird die Cuvette in einen Kasten eingelegt, dessen Boden zuvor etwa 2 cm hoch mit trockenem pulverisiertem Sand bedeckt worden ist. Der Behälter stützt sich mit Füßen auf dem Kastenboden auf, d.h. das Sandbett selbst bildet kein Auflager für den Behälter. Das Sandbett umgibt den geschlossenen Behälter - und nicht den vulkanisierten Formkörper - so daß sich das Schüttgut nicht in gleichmäßig dichter Anlage an den Oberflächen des Formkörpers befindet und der Formkörper selbst während des Vulkanisationsvorganges nicht mit dem Vulkanisationsdruck beaufschlagt wird.

Zum gattungsbildenden Stand der Technik gehört ferner die u.a. aus der US 2 421 102 bekannte Verwendung von mit feinkörnigem Granulat, z.B. Sand, gefüllten Druckkissen bei der Vulkanisation von Formkörper-Abschnitten, insbesondere von zubereiteten Schadstellen von Luftreifen. Wegen der notwendigerweise festen Umhüllung ist eine gleichmäßige Druckanlage nur an großflächigeren Abschnitten, aber nicht an einzelnen Profilstollen oder -nuten möglich. Darüber hinaus werden die relativ kostspieliegen Umhüllungen im Serienbetrieb durch Druck und Temperatur hoch beansprucht, was die Lebensdauer dieser Druckkissen begrenzt.

Aufgabe der Erfindung ist es, ein Verfahren und eine Vorrichtung zum Vulkanisieren von Formkörper-Abschnitten aus Kautschukmischungen, insbesondere von zuvor zubereiteten Schadstellen von z.B. Luftreifen aufzuzeigen, die mit technisch einfachen und kostengünstigen Mitteln eine gleichmäßige formschlüssige Verteilung des zur Vulkanisation bzw. Vernetzung erforderlichen Druckes und der entsprechenden Temperatureinleitung auch bei komplex geformten Kautschukkörpern ermöglicht.

Zur Lösung dieser Aufgabe wird der vorgeformte Kautschukkörper mit den zu vulkanisierenden Abschnitten in ein Bett aus einem feinkörnigen rieselfähigen Schüttgut eingetaucht, wobei das Schüttgut z.B. durch Vibration oder durch Bewegen des Formkörpers in gleichmäßig dichte Anlage an die Oberflächenkonturen des Formkörpers gedrückt wird und zumindest in den an die zu vulkanisierenden Abschnitte des Formkörpers angrenzenden Bereichen unter Druck gesetzt sowie auf die erhöhte Temperatur gebracht wird.

Die Erfindung nutzt die besonderen Eigenschaften eines Schüttgut-Bettes aus, das bei geeigneter Feinkörnigkeit eine fluidähnliche Konsistenz besitzt und dessen Partikel sich in gleichmäßiger Dichte an die Oberflächen auch kompliziert konturierter Formkörper anlegen, wenn diese durch Druck und anfängliche Bewegung in das Schüttgut-Bett eingebracht werden. Andererseits verhält sich das Schüttgut-Bett gegenüber großflächigen statischen Druckwirkungen wie ein starrer Körper und kann daher ein quasi festes Auflager für flächige Abschnitte des Formkörpers bilden. Darüber hinaus sind auch die thermischen Eigenschaften des geeigneten Schüttguts für den erfindungsgemäßen Vulkanisationsprozeß von besonderer Bedeutung, das einer punktuellen Überhitzung entgegenwirkt, so daß eine gleichmäßige Einhaltung und Verteilung der Vulkanisationstemperatur im Reparaturbereich des Formkörpers gewährleistet wird.

Des weiteren ermöglicht das Schüttgut eine optimierte Wärmeeinleitung in den zu vulkanisierenden Formkörper, ohne daß periphere Bereiche einer unnötigen Temperatureinwirkung ausgesetzt werden. Bei Serienfertigung ermöglicht die Fähigkeit der Wärmespeicherung im Schüttgut zudem eine deutliche Reduzierung der Vulkanisationszeit, welche je nach Formteil bei bis zu 25 % liegen kann.

Die erfindungsgemäße Vorrichtung zum Vulkanisieren von Formkörpern aus Kautschukmischungen, insbesondere von zubereiteten Schadstellen von Luftreifen weist ein der Kontur des zu vulkanisierenden Formkörpers angepaßtes Auflager, ein den Formkörper gegen dieses Auflager pressendes Druckorgan zur Erzeugung des Vulkanisierdruckes und mindestens ein Heizmittel zum Erwärmen des zu vulkanisierenden Abschnitts des Formkörpers auf, wobei erfindungsgemäß das Auflager ein Bett aus rieselfähigem feinkörnigem und beheizbarem Schüttgut ist. Zweckmäßig besteht das Schüttgut aus einem Quarzsand geeigneter Körnung, einem feinkörnigen vorteilhaft sphärischen Metall-Granulat oder anderen mineralischen Feststoffmischungen, welche die vorstehend genannten fluidähnlichen Eigenschaften im lockeren Zustand und ein hohes Druckaufnahmevermögen im festen Ruhezustand haben. Daneben können auch wärmebeständige Fasermaterialien, insbesondere lose Mineralstoffasern, allein oder als Gemisch mit den vorstehend genannten feinkörnigen Schüttgütern als Bettmaterial verwendet werden. Zusätzlich kann das Schüttgut bestimmte Substanzen, z.B. Schwefel, Beschleuniger od. dgl. enthalten, die den Verlauf des Vulkanisationsprozesses in einer gewünschten Richtung positiv beeinflussen.

Die Beheizung des Schüttgut-Bettes zumindest in dem an den Formkörper angrenzenden Bereich kann auf verschiedene Weise erfolgen, beispielsweise durch Verwendung einer elektrischen Heizmatte, elektrischer Heizstäbe, die in einem bestimmten Abstand vom Formkörper in das Schüttgut eingebettet werden, durch ein in das Schüttgut eingeleitetes Heißgas oder auch durch induktive Beheizung.

Damit während des Vulkanisationsprozesses keine Schüttgutpartikel in die sich erweichenden Zonen des Formkörpers eingedrückt werden können, kann zweckmäßigerweise eine hitzebeständige hochflexible Schutz-/Trennfolie verwendet werden, welche die dem heißen Schüttgut-Bett ausgesetzte Oberfläche der Rohgummifüllung abdeckt.

Eine zweckmäßige Ausgestaltung der Erfindung zeichnet sich schließlich durch Verwendung mindestens eines Vibrators aus, der an der Wandung des Bettbehälters montiert ist und das Schüttgut während des Einbringens des Formkörpers in hochfrequente Schwingungen und damit einen quasi fließfähigen Zustand versetzt. Zum gleichen Zweck können Vibratoren auch als Handgeräte variabel an der Behälterwandung, an dem zu vulkanisierenden Formteil wirkend bzw. in das Schüttgut eintauchend eingesetzt werden. Das Einbringen von Schwingungen wird nur während der Vorbereitungsphase vor Beginn des eigentlichen Vulkanisationsvorganges vorgenommen.

Gegenstand der Erfindung ist insbesondere eine Vorrichtung zum Vulkanisieren einer zubereiteten Schadstelle eines Luftreifens, die einen teilweise mit dem Schüttgut gefüllten trogförmigen Behälter, einen vertikal verschiebbaren Druckkopf, ein Druckpolster und eine Heizmatte zwischen dem Druckkopf und der Reifeninnenfläche, eine an der profilierten Reifenaußenfläche dicht anliegende hitzefeste Folie sowie eine in dem Schüttgut-Bett angeordnete Beheizung aufweist.

Die besonderen Vorteile der Erfindung liegen in der außerordentlich einfachen Durchführung der Vulkanisation auch von kompliziert geformten Kautschukkörpem durch die Verwendung des sich auch an höchst komplexe Formen anpassenden Schüttgut-Bettes, das für den Vulkanisationsprozeß besonders günstige Eigenschaften hinsichtlich Temperaturleitung und -verteilung besitzt und eine genaue Form-Anpassung ohne aufwendige Maßnahmen ermöglicht. Nach dem erfindungsgemäßen Konzept können erstmals auch Einzelstollen von Großreifen repariert bzw. wiederhergestellt werden, was bisher nicht möglich war. Als weiteren Vorteil ist die Wärmespeicherung des Schüttgutes bei Serien-Vulkanisation zu benennen.

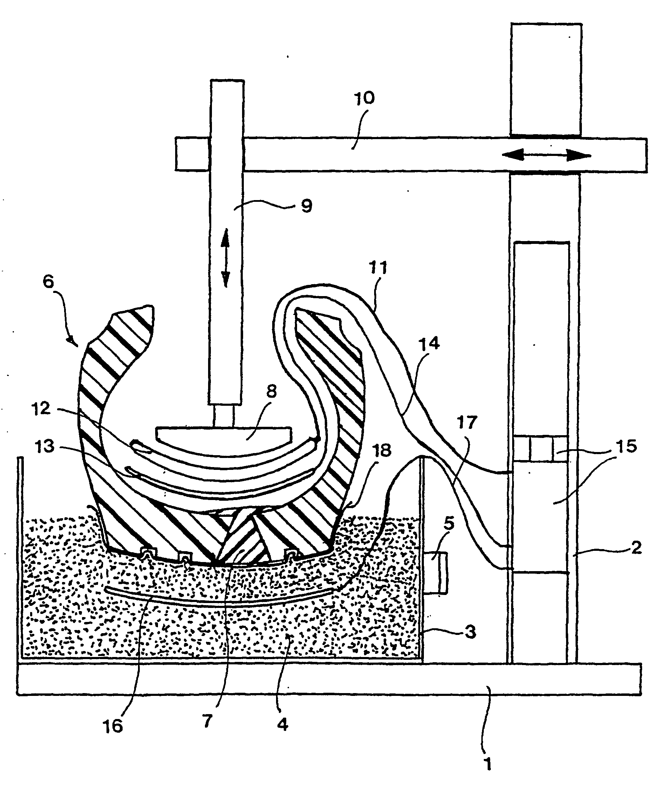

Weitere Vorzüge und Besonderheiten der Erfindung ergeben sich aus der folgenden Beschreibung einer Vorrichtung zur Vulkanisation von zubereiteten Schadstellen in einem Luftreifen, die in der Zeichnung schematisch dargestellt ist.

Auf einer ggf. mit Laufrollen versehenen Plattform 1 sind nebeneinander ein Ständer 2 sowie ein trogförmiger Behälter 3 befestigt. Dieser Behälter 3 ist teilweise mit einem Quarzsand 4 gefüllt und weist an einer Stelle des Behälters mindestens einen Vibrator 5 auf, der nach elektrischer, mechanischer oder pneumatischer Aktivierung das Quarzsand-Bett in einen quasi fließfähigen dichten Zustand versetzt.

In das Quarzsand-Bett 4 taucht ein Luftreifen 6 ein, in welchem eine Schadstelle 7 zuvor mit einer unvulkanisierten Kautschukmasse ausgefüllt worden ist.

Im Reifeninneren befindet sich ein Druckkopf 8, der am unteren Ende einer zustellbaren Stange 9 montiert ist. Diese Stange 9 ist in der Durchbrechung eines Querträgers 10 geführt, welcher im oberen Teil des Ständers 2 in Pfeilrichtung verstellbar gehalten ist. Zwischen der balligen Unterseite des Druckkopfes 8 und der Innenfläche des Reifens 6 ist ferner ein mit einem Druckfluid, z.B. Druckluft, über eine Leitung 11 beaufschlagbares Druckpolster 12 sowie eine Heizmatte 13 angeordnet, die über eine elektrische Leitung 14 mit einer an der Säule montierten Steuereinheit 15 verbunden ist. Eine zweite Heizmatte 16 ist in einem geeigneten Abstand zur Fläche des Reifens im Quarzsand-Bett 4 positioniert und über eine elektrische Leitung 17 ebenfalls mit der Steuereinheit 15 verbunden. Die Außenfläche der Reparaturstelle des Luftreifens kann durch eine hochflexible hitzebeständige Schutzfolie 18 abgedeckt sein, um eine zusätzliche Glättung der zu vulkanisierenden Kautschukfüllung zu erzielen.

Zur Durchführung der Vulkanisation des in die Schadstelle eingebrachten Kautschukgemisches sowie zur Vulkanisation eines ggf. notwendigen Reparaturpflasters wird der Luftreifen mit dem Reparaturabschnitt auf das Schüttgut-Bett aufgesetzt. Anschließend wird durch entsprechende Verstellbewegungen der Druckkopf 8 in das Innere des Reifens abgesenkt, nachdem die Heizmatte 13 sowie das Druckpolster 12 in das Reifeninnere eingebracht worden sind. Durch die mit einer vorgegebenen Kraft erfolgte Absenkbewegung des Druckkopfes 8 und/oder durch Beaufschlagung des Druckpolsters 12 mit definiertem Druck mittels Druckfluid wird der Gummikörper gegen das als Auflager dienende Schüttgut-Bett gedrückt. Durch Aktivierung des Vibrators 5 für einen definierten Zeitraum und die somit in das Schüttgut eingebrachten Schwingungen erfolgt eine Verdichtung und formschlüssige Anlage des Schüttgutes an die Außenkontur des Reifens. Nach Ablauf der definierten Laufzeit des Vibrators erfolgt eine nochmalige Erhöhung des Druckes im Druckpolster 12, wodurch der für die Vulkanisation notwendige Druck auf die Schadensstelle aufgebracht wird. Das Quarzsand-Bett dient nunmehr während des Vulkanisationsprozesses als ruhendes, formstabiles Gegenlager. Die für die Vulkanisation notwendige Beheizung erfolgt durch Einschalten der Stromzufuhr zu den Heizmatten 14, 16. Mittels Stellschaltern können die verschiedenen Parameter eingestellt werden, so daß die Vulkanisation abläuft und nach einer vorher bestimmten Zeit beendet wird.

Die Erfindung ist nicht auf das dargestellte Ausführungsbeispiel beschränkt. So können statt des dargestellten Reifens auch andere Formkörper teilweise oder vollständig in dem Schüttgut-Bett vulkanisiert werden, wobei zur Beheizung des Schüttgut-Bettes zumindest in den den Formkörper benachbarten Bereichen auch Heißgase verwendet werden können, welche z.B. durch poröse Wand- oder Bodenteile des Behälters in das Schüttgut-Bett injiziert werden. Bei dem dargestellten Ausführungsbeispiel ist es auch möglich, ein geeignetes Schüttgut, insbesondere Quarzsand, in den Innenraum des Luftreifens bis zu einem vorgewählten Niveau einzubringen, wobei die Heizmatte 13 dann im Schüttgut eingebettet ist und seine Oberfläche direkt vom Druckkopf 8 - ggf. unter Wegfall des Druckluftkissens 12 - beaufschlagt wird.

## Patentansprüche

1. Verfahren zum Vulkanisieren oder Vernetzen von Formkörper-Abschnitten insbesondere aus Kautschukmischungen unter Druck und erhöhter Temperatur, bei welchem
- der Formkörper in ein feinkörniges riesel- bzw. fließfähiges Schüttgut eingebettet wird, das als formschlüssiges Auflager für den Formkörper dient und für einen Vulkanisationsvorgang auf die erhöhte Temperatur gebracht wird,
**dadurch gekennzeichnet, daß**
- der Formkörper mit dem zu vulkanisierenden Abschnitt von oben eingedrückt wird,
- das Schüttgut vor der Vulkanisation in gleichmäßige dichte Druckanlage an die Oberflächen des zu vulkanisierenden Formkörperabschnitts gebracht und verdichtet wird und
- der auf den Formkörper ausgeübte Druck bis zur Beendigung des Vulkanisationsvorganges aufrechterhalten wird.

2. Verfahren nach Anspruch 1, **dadurch gekennzeichnet, daß** das Schüttgutbett und/oder der Formkörper während des Eindrückvorgangs hin- und herbewegt oder in Vibrationen versetzt wird.

3. Verfahren nach einem der Ansprüche 1 bis 2, **dadurch gekennzeichnet, daß** die Oberfläche des Formkörpers zumindest in dem zu vulkanisierenden Abschnitt vor dem Einbringen in das Schüttgut-Bett mit einer warmfesten flexiblen Folie, einem warmfesten Anstrich, angepaßten Formteilen aus Blech oder Kunststoff od. dgl. bedeckt wird.

4. Vorrichtung zum Vulkanisieren von Formkörpem aus Kautschukmischungen, insbesondere von zubereiteten Schadstellen in einem Luftreifen, bestehend aus
- einem der Kontur des zu vulkanisierenden Formkörpers angepaßten Auflager,
- einem den Formkörper gegen das Auflager pressenden Druckorgan zur Erzeugung des Vulkanisierdrucks und
- mindestens einem Heizelement zum Erwärmen des zu vulkanisierenden Abschnitts des Formkörpers auf die Vulkanisiertemperatur,
**dadurch gekennzeichnet, daß**
- das Auflager ein Bett aus einem rieselfähigen feinkörnigen und beheizbaren Schüttgut (4) ist.

5. Vorrichtung nach Anspruch 4, **dadurch gekennzeichnet, daß** das Schüttgut (4) ein Quarzsand, ein fenkörniges vorzugsweise sphärisches Metall-Granulat od.dgl. ist.

6. Vorrichtung nach Anspruch 4 oder 5, **dadurch gekennzeichnet, daß** das Schüttgut (4) den Vulkanisationsprozeß beeinflussende Substanzen enthält.

7. Vorrichtung nach einem der Ansprüche 4 bis 6, **dadurch gekennzeichnet, daß** im Schüttgut (4) Heizelemente (16) vorgesehen sind.

8. Vorrichtung nach einem der Ansprüche 4 bis 7, **gekennzeichnet durch** zumindest einen Vibrator (5), der das Schüttgut (4) zumindest zeitweise in Schwingungen versetzt.

9. Vorrichtung zum Vulkanisieren der zubereiteten Schadstelle eines Luftreifens nach einem der vorhergehenden Ansprüche 4 bis 8, **gekennzeichnet durch**
- einen teilweise mit dem Schüttgut (4) gefüllten trogförmigen Behälter (3),
- einen verschiebbaren Druckkopf (8),
- ein Druckpolster (12) und eine Heizmatte (13) zwischen dem Druckkopf (8) und der Reifeninnenfläche,
- eine an der profilierten Reifenaußenfläche dicht anliegende warmfeste Folie (18) und
- eine in dem Schüttgut in einem vorbestimmten Abstand zur Außenfläche des Reifens (6) eingebettete Heizmatte (16).

## Claims

1. Method for vulcanising or cross-linking sections of shaped bodies consisting especially of rubber mixtures under pressure and at an increased temperature, in which
the shaped body is embedded in a fine-grained pourable or free-flowing bulk material which serves as a positive support for the shaped body and is heated to an increased temperature for a vulcanisation process,
**characterised in that**
- the section of the shaped body to be vulcanised is pressed in from above,
- the bulk material is brought into a uniform, tight pressure contact to the surfaces of the section of the shaped body to be vulcanised and is densified previous to the vulcanisation, and
- the pressure applied to the shaped body is maintained until the vulcanisation process has been completed.

2. Method according to claim 1, **characterised in that** the bed of bulk material and/or the shaped body are reciprocated or vibrated during the pressing-in process.

3. Method according to one of the claims 1 to 2, **characterised in that** previous to the insertion into the bed of bulk material the surface of the shaped body is covered with a heat-resistant flexible foil, a heat-resistant coat of paint, matching shaped parts of sheet metal or plastic or the like at least on the section to be vulcanised.

4. Device for vulcanising shaped bodies consisting of rubber mixtures, particularly prepared defective sections in a pneumatic tyre, comprising
- a support (4) adjusted to the contour of the shaped body to be vulcanised,
- a pressure member pressing the shaped body against the support for generating the vulcanisation pressure, and
- at least one heating element for heating the section of the shaped body to be vulcanised to the vulcanisation temperature,
**characterised in that**
- the support is a bed consisting of a pourable, fine-grained and heatable bulk material (4).

5. Device according to claim 4, **characterised in that** the bulk material (4) is silica sand, fine-grained preferably spherical metallic granules, or the like.

6. Device according to claim 4 or 5, **characterised in that** the bulk material (4) contains substances influencing the vulcanisation process.

7. Device according to one of the claims 4 to 6, **characterised in that** heating elements (16) are provided in the bulk material (4).

8. Device according to one of the claims 4 to 7, **characterised by** at least one vibrator (5) which vibrates the bulk material (4) at least temporarily.

9. Device for vulcanising the prepared defective section of a pneumatic tyre according to one of the preceding claims 4 to 8, **characterized by**
- trough-shaped container (3) partially filled with the bulk material (4),
- a shiftable pressure head (8),
- a pressure pad (12) and a heater mat (13) disposed between the pressure head (8) and the inner surface of the tyre,
- a heat-resistant foil (18) tightly abutting on the sculptured outer surface of the tyre, and
- a heater mat (16) embedded in the bulk material in a predetermined distance to the outer surface of the tyre (6).

## Revendications

1. Procédé de vulcanisation ou de réticulation de parties de corps formés en particulier constitués de mélanges de caoutchouc sous pression et à haute température, procédé dans lequel le corps formé est inséré dans une matière en vrac à grains fins apte à l'écoulement ou au fluage, matière qui sert de support par concordance de formes pour le corps formé et qui est porté à haute température pour un processus de vulcanisation,
**caractérisé en ce que**,
le corps formé est enfoncé par le haut avec la partie à vulcaniser, la matière en vrac est placée, avant la vulcanisation, en une disposition de pression constante et dense sur les surfaces de la partie du corps formé à vulcaniser et est comprimée, et la pression exercée sur le corps formé est maintenue jusqu'à achèvement du processus de vulcanisation.

2. Procédé selon la revendicatiun 1, **caractérisé en ce qu'**on fait faire un mouvement de va-et-vient au lit de matière en vrac et/ou des corps formés ou bien on fait vibrer celui-ci.

3. Procédé selon l'une des revendications 1 à 2, **caractérisé en ce que** la surface du corps formé est recouverte, avant l'insertion dans le lit de matière en vrac, au moins dans la partie à vulcaniser, d'un film flexible résistant à la chaleur, d'un enduit résistant à la chaleur, de moulages adaptés en tôle ou en plastique ou autres choses de ce genre.

4. Dispositif de vulcanisation de corps formés constitués de mélanges de caoutchouc, en particulier d'endroits d'endommagement apprêtés dans un pneumatique, comprenant
- un support adapté au contour du corps formé à vulcaniser,
- un organe de pression pressant le corps formé contre le support en vue de générer la pression de vulcanisation, et
- au moins un élément chauffant pour porter la partie du corps formé à vulcaniser à la température de vulcanisation,
**caractérisé en ce que**
- le support est un lit constitué d'une matière en vrac (4) fluide, à grains fins et chauffante.

5. Dispositif selon la revendication 4, **caractérisé en ce que** la matière en vrac (4) est un sable de quartz, un granulat métallique à grains fins, de préférence sphérique ou autres matériaux de ce genre.

6. Dispositif selon la revendication 4 ou 5, **caractérisé en ce que** la matière en vrac (4) comprend des substances influençant le processus de vulcanisation.

7. Dispositif selon l'une des revendications 4 à 6, **caractérisé en ce que** des éléments chauffants (16) sont prévus dans la matière en vrac (4).

8. Dispositif selon l'une des revendications 4 à 7, **caractérisé par** au moins un vibrateur (5) qui fait vibrer le produit en vrac (4) au moins de temps en temps.

9. Dispositif de vulcanisation de l'endroit d'endommagement apprêté d'un pneumatique selon l'une des revendications précédentes 4 à 8, **caractérisé par**
- un récipient (3) en forme d'auge, rempli partiellement avec la matière en vrac (4),
- une tête de pression (8) mobile,
- un coussin de pression (12) et une natte chauffante (13) entre la tête de pression (8) et la surface interne du pneumatique,
- un film (18) résistant à la chaleur et bien plaqué contre la surface externe profilée du pneumatique et
- une natte chauffante (16) enfoncée dans la matière en vrac à une distance déterminée par rapport à la surface externe du pneumatique (6).
